# EUROPÄISCHE PATENTSCHRIFT

(11) **EP 1 631 808 B1**
(45) Veröffentlichungstag und Bekanntmachung des Hinweises auf die Patenterteilung: **15.11.2006**
(21) Anmeldenummer: 04735233.1
(22) Anmeldetag: 28.05.2004
(51) Int. Cl.: G01M 3/24

(54) **SCHALLAUFNEHMER**
ACOUSTIC PICK-UP
CAPTEUR ACOUSTIQUE

(30) Priorität: 06.06.2003 DE 10325801
(43) Veröffentlichungstag der Anmeldung: 08.03.2006
(73) Patentinhaber: SIEMENS AKTIENGESELLSCHAFT, 80333 München (DE)
(72) Erfinder: ENS, Wolfgang, 76351 Linkenheim-Hochstetten (DE); PÜTTMER, Alf, 76185 Karlsruhe (DE)
(86) Internationale Anmeldenummer: PCT/EP2004/005826
(87) Internationale Veröffentlichungsnummer: WO 2004/109249

(56) Entgegenhaltungen:
- EP-A- 1 022 702
- DE-A1- 19 947 129
- DE-A1- 19 963 608
- US-A- 4 237 454

## Beschreibung

Die Erfindung betrifft einen Schallaufnehmer, insbesondere einen Ultraschallaufnehmer zur akustischen Diagnose von Maschinen, nach dem Oberbegriff des Anspruchs 1.

In vielen sicherheitsrelevanten Bereichen der Prozess- und Energietechnik hängt der störungsfreie Betrieb einer Anlage von der einwandfreien Funktion der eingesetzten Maschinen oder Maschinenteile ab. Zur Vermeidung kostenintensiver, irregulärer Betriebsunterbrechungen sollten beispielsweise Ventil- oder Lagerschäden möglichst bereits im Anfangsstadium erkannt werden, das heißt bevor ein Ausfall der Komponenten einen Stillstand der Anlage verursachen kann. Beispielsweise führen defekte Ventilsitze zu Leckströmungen, die eine breitbandige Ultraschallemission erzeugen. Eine Aufnahme und Auswertung der Ultraschallemissionen eines Ventils kann somit zur Früherkennung von Ventilschäden dienen. Ein zur Aufnahme des Körperschallsignals geeigneter Ultraschallaufnehmer ist aus der DE 299 12 847 U1 bekannt. Er besitzt ein Gehäuse, in welchem ein piezoelektrisches Messelement und eine Schaltung zur Signalaufbereitung angeordnet sind. Das aufbereitete Messsignal ist als Ausgabesignal über ein Kabel einer entfernt angeordneten Auswerteeinrichtung zuführbar. Die zum Betrieb der Signalaufbereitungsschaltung erforderliche Hilfsenergie wird von der Auswerteeinrichtung geliefert und ebenfalls über das Kabel dem Schallaufnehmer zur Verfügung gestellt. In der Auswerteeinrichtung sind also eine zusätzliche Einrichtung zur Erzeugung der Hilfsenergie und im Kabel zusätzliche Adern zur Hilfsenergieübertragung erforderlich.

Aus der EP 1 022 702 A2 ist ein Messaufnehmer mit drahtloser Signalübertragung bekannt, der im Inneren eines Gehäuses ein piezoelektrisches Messelement zur Erzeugung eines elektrischen Messsignals und eine elektronische Schaltung aufweist.

Die zum Betrieb der elektronischen Schaltung und zur Signalübertragung erforderliche Hilfsenergie wird aus dem elektrischen Messsignal gewonnen.

Ein weiterer Aufnehmer mit drahtloser Signalübertragung ist aus der US-PS 4 237 454 bekannt.

Der Erfindung liegt die Aufgabe zugrunde, einen Schallaufnehmer, insbesondere einen Ultraschallaufnehmer zur akustischen Diagnose von Maschinen, zu schaffen, der ohne eine externe Hilfsenergiezufuhr auskommt und es ermöglicht, ein Messsignal in einem auszuwertenden Frequenzbereich zu übertragen.

Zur Lösung dieser Aufgabe weist der neue Schallaufnehmer der eingangs genannten Art die im kennzeichnenden Teil des Anspruchs 1 angegebenen Merkmale auf. In Anspruch 2 ist eine vorteilhafte Weiterbildung des Schallaufnehmers beschrieben.

Die Erfindung hat den Vorteil, dass der Schallaufnehmer die zum Betrieb einer elektronischen Schaltung zur Signalaufbereitung erforderliche Energie seiner Umgebung entnimmt, diese ihm also nicht über gesonderte Adern eines Kabels zugeführt werden muss. Da der Schallaufnehmer die Hilfsenergie aus dem aufzunehmenden Schallsignal erzeugt, steht immer zu den Zeiten für den Betrieb der Schaltung ausreichend Energie zur Verfügung, zu denen ein eine gewisse Mindestintensität übersteigendes Schallsignal vorliegt und ein entsprechendes Ausgabesignal zu erzeugen ist. Die Übertragung des Ausgabesignals zur Auswerteeinrichtung kann beispielsweise asymmetrisch oder symmetrisch über Kabel oder alternativ dazu drahtlos über Funk oder Infrarotlicht erfolgen.

Die Hilfsenergie wird aus dem elektrischen Messsignal des piezoelektrischen Messelements erzeugt. Das hat den Vorteil, dass neben dem eigentlichen Messelement des Schallaufnehmers keine zusätzlichen elektroakustischen Bauelemente erforderlich sind.

Bei der Anwendung von Schallaufnehmern zur Maschinendiagnose, insbesondere zur Diagnose einer Ventilleckage oder eines Lagerschadens, hat sich herausgestellt, dass meist die Auswertung eines bestimmten Frequenzbereichs zur Ableitung einer Diagnoseaussage genügt. Beispielsweise ist aus der DE 199 47 129 A1 bekannt, bei der Diagnose einer Ventilleckage zwischen einem unteren Spektralbereich, in welchem im Wesentlichen die Arbeitsgeräusche des Ventils enthalten sind, und einem oberen Spektralbereich, der in bestimmten Betriebszuständen vorwiegend Fehlergeräusche enthält, zu unterscheiden. Die Grenzfrequenz zwischen diesen beiden Spektralbereichen kann zwischen 50 kHz und beispielsweise 200 kHz gewählt werden, da die Arbeitsgeräusche vorwiegend in einem Bereich kleiner 120 kHz auftreten. Zur Fehlererkennung wird daher ein Spektralbereich des Messsignals oberhalb einer Frequenz von 50 kHz ausgewertet, der aber nicht unmittelbar bei 50 kHz beginnen muss. Nur Signalanteile in diesem Frequenzbereich müssen verstärkt und zur Auswerteeinrichtung drahtgebunden oder drahtlos übertragen werden. Das durch das piezoelektrische Messelement gelieferte Signal ist in dem Frequenzbereich zwischen 0 und 50 kHz besonders energiereich, da die Signalanteile hier eine erheblich größere Amplitude besitzen. Die in diesem Bereich befindlichen Signalanteile können in vorteilhafter Weise zur Erzeugung der zum Betrieb der Aufbereitungsschaltung erforderlichen Energie genutzt werden. Es wird somit in vorteilhafter Weise eine Frequenzweiche vorgesehen, durch welche das elektrische Messsignal des piezoelektrischen Elements im Wesentlichen in ein Auswertesignal in einem ersten Frequenzbereich, das in eine zur Übertragung zu einer außerhalb des Gehäuses angeordneten Auswerteeinrichtung geeignete Form aufbereitet wird, und ein Versorgungssignal in einem zweiten Frequenzbereich getrennt wird, das die zum Betrieb der Aufbereitungsschaltung erforderliche Hilfsenergie liefert. Eine derartige Frequenzweiche hat zudem den Vorteil, dass eine geringe Verfälschung des Auswertesignals trotz Ableitung des Versorgungssignals aus demselben elektrischen Messsignal erfolgt.

In vorteilhafter Weise wird eine bessere Qualität der Hilfsenergie für die Schaltung zur Signalaufbereitung und damit eine bessere Qualität des Ausgabesignals erreicht, wenn eine Einrichtung zur Gleichrichtung und zur Glättung des Versorgungssignals vorgesehen wird.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: einen Schallaufnehmer in teilweiser Schnittdarstellung und
- Figur 2: ein Blockschaltbild der elektronischen Komponenten des Schallaufnehmers.

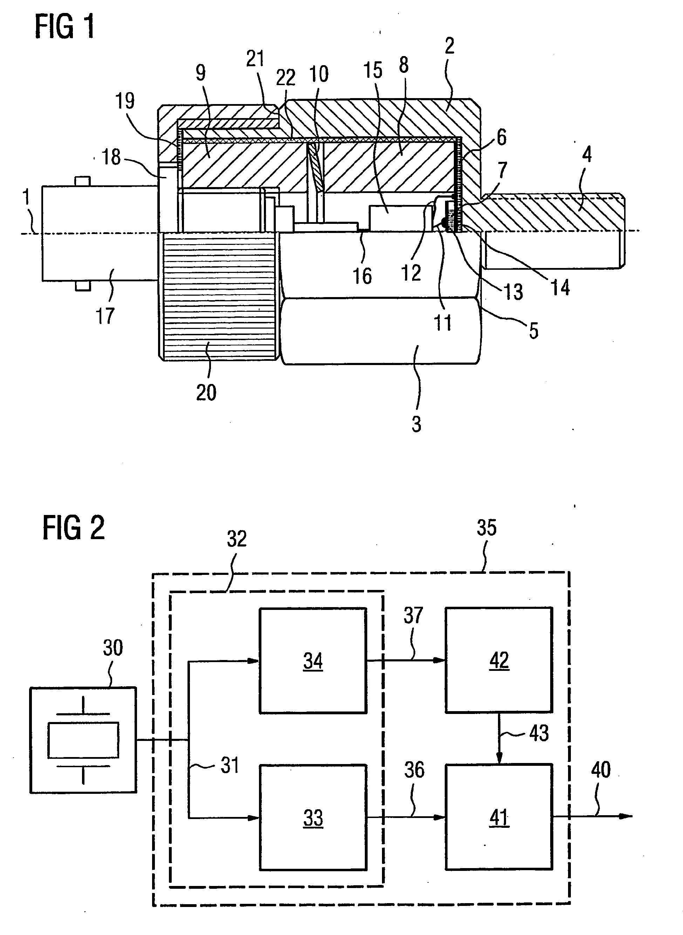

In der unteren Hälfte der Figur 1, das heißt unterhalb einer Achse 1, ist eine Seitenansicht eines im Wesentlichen rotationssymmetrisch aufgebauten Schallaufnehmers, in der oberen Hälfte ein Längsschnitt durch den Schallaufnehmer dargestellt.

Der Schallaufnehmer besitzt gemäß Figur 1 ein topfförmiges Gehäuse 2, das an seiner Außenseite mit Angriffsflächen 3 für einen Schraubenschlüssel versehen ist. Als Befestigungsmittel ist ein Gewindezapfen 4 vorgesehen, der in eine dazu korrespondierende Gewindebohrung am Anbauplatz eingedreht werden kann. Mit einem Schraubenschlüssel kann das erforderliche Anzugsmoment aufgebracht werden, um eine gute Einkopplung der Schwingungen über eine Andruckfläche 5 des Gehäusebodens am Anbauplatz zu gewährleisten. Auf der Innenseite des Gehäusebodens befindet sich eine Isolierscheibe 6 aus demselben Material, aus dem auch ein piezoelektrisches Element 7 besteht, auf das eine metallisierte, einem Hülsenabschnitt 8 zugewandte Seite der Isolierscheibe 6 aufgelötet ist. Der Hülsenabschnitt 8 bildet zusammen mit einem Hülsenabschnitt 9 und einer Tellerfeder 10 eine Hülse, die sich über die gesamte Länge der Messelektronik des Schallaufnehmers erstreckt und wesentlicher Teil der elektromagnetischen Abschirmung ist. Innerhalb der Hülse sind weiterhin Anschlussleitungen 11 und 12 zur elektrischen Verbindung einer Signalelektrode 13 bzw. einer Masseelektrode 14 des piezoelektrischen Messelements 7 mit einer elektronischen Schaltung 15, die elektronische Schaltung 15 selbst und elektrische Zuleitungen 16 zur elektronischen Schaltung gegen elektromagnetische Störungen abgeschirmt. Die elektronische Schaltung 15 dient dazu, die in dem piezoelektrischen Messelement 7 durch akustische Schwingungen verursachten Ladungsverschiebungen in ein Signal zu wandeln, das über ein Kabel oder - alternativ zum gezeigten Ausführungsbeispiel - drahtlos auch über größere Entfernungen gut zu übertragen ist. Eine Grundfläche der Hülse wird durch die elektrisch leitende Metallbeschichtung der Isolierscheibe 6 verschlossen. Die Metallbeschichtung dient gleichzeitig als Masseelektrode 14. Im Bereich der anderen Grundfläche ist die Innenwand der Hülse mit einem Innengewinde versehen, in welches eine BNC-Buchse 17 soweit eingedreht ist, bis ein umlaufender Kragen 18 der BNC-Buchse 17 auf einer Dichtung 19 zu liegen kommt. Statt der BNC-Buchse können alternativ selbstverständlich auch andere Steckverbindertypen eingesetzt oder das Kabel direkt in der Hülse angeschlossen werden. Zur Lagesicherung der Hülse dient ein Verschlussteil 20, welches die andere Grundfläche der Hülse zumindest teilweise übergreift und mit einem Innengewinde versehen ist, das bis zu einem Anschlag 21 auf ein dazu korrespondierendes Außengewinde des Gehäuses 2 aufgedreht ist. Zwischen der Stirnseite der Hülse und der Innenwand des Gehäuses 2 befindet sich eine Isolierfolie 22. Bezüglich weiterer konstruktiver Einzelheiten des Schallaufnehmers wird auf die DE 299 12 847 U1 verwiesen.

Gemäß Figur 2 nimmt ein Schallaufnehmer durch ein piezoelektrisches Messelement 30, das über einen großen Frequenzbereich Körperschall in ein elektrisches Messsignal 31 umwandelt, ein Schallsignal auf. Dieses Messsignal 31 wird auf eine Frequenzweiche 32 geführt, die im Wesentlichen aus einem ersten Filter 33 und einem zweiten Filter 34 besteht. Das erste Filter 33 ist durchgängig für die Signalanteile des elektrischen Messsignals 31, die oberhalb einer Grenzfrequenz von 50 kHz liegen. Ein Auswertesignal 36 enthält also nur noch höherfrequente Anteile, die im gezeigten Ausführungsbeispiel zur Leckagediagnose ausgewertet werden. Bei einer kabelgebundenen Übertragung eines Ausgabesignals 40 zu einer entfernt angeordneten und in der Zeichnung nicht dargestellten Auswerteeinrichtung dient ein Verstärker 41 dazu, das Auswertesignal 36 in eine zur Übertragung geeignete Form aufzubereiten. Für eine drahtlose Übertragung könnte alternativ zum gezeigten Ausführungsbeispiel zusätzlich ein HF-Modulator und eine Antenne zur Erzeugung eines entsprechenden Funksignals als Ausgabesignal in der Aufbereitungsschaltung 35 vorgesehen werden. Das zweite Filter 34 ist durchlässig für die Signalanteile des elektrischen Messsignals 31, die unter einer Grenzfrequenz von 50 kHz liegen, zwar eine große Amplitude aufweisen, aber für die Ableitung einer Diagnoseaussage von untergeordneter Bedeutung sind. Ein das Filter 34 passierendes Versorgungssignal 37 wird in einer Einrichtung 42 gleichgerichtet und geglättet. Für den Verstärker 41 steht somit ein geglättetes Versorgungssignal 43 zur Verfügung, so dass eine gute Qualität des Ausgangssignals 40 gewährleistet werden kann. Die Filter 33 und 34, der Verstärker 41 und die Einrichtung 42 sind somit Bestandteile der elektronischen Schaltung, die das elektrische Messsignal 31 in eine Form aufbereitet, die zur Übertragung zu einer außerhalb des Schallaufnehmergehäuses angeordneten Auswerteeinrichtung geeignet ist, und dabei in vorteilhafter Weise ohne externe Hilfsenergiezufuhr auskommt.

Gemäss dem bekannten Stand der Technik kann selbstverständlich zur Erzeugung eines Versorgungssignals ein weiterer elektroakustischer Wandler vorgesehen werden, der aus dem aufzunehmenden Schallsignal ein energiereiches elektrisches Signal liefert, aus welchem die Hilfsenergie für eine Schaltung zur Aufbereitung des Messsignals erzeugbar ist. Ein derartiger zusätzlicher Wandler kann jedoch in vorteilhafter Weise bei dem beschriebenen Ausführungsbeispiel entfallen.

## Patentansprüche

1. Schallaufnehmer, insbesondere Ultraschallaufnehmer zur akustischen Diagnose von Maschinen, mit einem Gehäuse (2), in dessen Inneren ein piezoelektrisches Messelement (7, 30) zur Erzeugung eines elektrischen Messsignals (31) und eine elektronische Schaltung (15, 35) angeordnet sind, durch welche das Messsignal in eine zur Übertragung zu einer außerhalb des Gehäuses angeordneten Auswerteeinrichtung geeignete Form aufbereitbar ist, wobei Mittel (30, 34, 42) vorgesehen sind, durch welche aus dem elektrischen Messsignal (31) des piezoelektrischen Messelements (30), die zum Betrieb der elektronischen Schaltung (35) erforderliche Hilfsenergie erzeugbar ist, **dadurch gekennzeichnet, dass** eine Frequenzweiche (32) vorgesehen ist, zur Aufteilung des elektrischen Messsignals (31) des piezoeleketrischen Messelements (30) in ein Auswertesignal (36) in zumindest einem ersten Frequenzbereich und ein Versorgungssignal (37) in zumindest einem zweiten, vom ersten getrennten Frequenzbereich.

2. Schallaufnehmer nach Anspruch 1, **dadurch gekennzeichnet, dass** eine Einrichtung (42) zur Gleichrichtung und Glättung des Versorgungssignals (37) vorgesehen ist.

## Claims

1. Acoustic sensor, in particular an ultrasonic sensor, for acoustic diagnosis of machinery, having a housing (2), inside of which are arranged a piezoelectric measuring element (7, 30) for generating an electrical measurement signal (31) and an electronic circuit (15, 35), by means of which the measurement signal can be conditioned into a form suitable for transmission to an analysis device positioned outside the housing, means (30, 34, 42) being provided by which the auxiliary energy required for operating the electronic circuit (35) can be generated from the electrical measurement signal (31) of the piezoelectric measuring element (30), **characterized in that** a frequency separating filter (32) is provided for splitting the electrical measurement signal (31) of the piezoelectric measuring element (30) into an analysis signal (36) in at least one first frequency range and a supply signal (37) in at least one second frequency range separate from the first frequency range.

2. Acoustic sensor according to Claim 1, **characterized in that** a device (42) for rectifying and smoothing the supply signal (37) is provided.

## Revendications

1. Capteur acoustique, en particulier capteur ultrasonore, pour réaliser un diagnostic acoustique sur des machines, comportant un boîtier (2) à l'intérieur duquel se trouvent un élément de mesure (7, 30) piézo-électrique pour produire un signal de mesure (31) électrique et un circuit électronique (15, 35) qui permet de préparer le signal de mesure dans une forme adaptée à la transmission à un dispositif d'exploitation situé à l'extérieur du boîtier, des moyens (30, 34, 42) étant prévus pour pouvoir, à partir du signal de mesure électrique (31) de l'élément de mesure piézo-électrique (30), produire l'énergie auxiliaire nécessaire pour faire fonctionner le circuit électronique (35),
**caractérisé en ce qu'**un diviseur de fréquence (32) est prévu pour répartir le signal de mesure électrique (31) de l'élément de mesure piézo-électrique (30) en un signal d'exploitation (36) dans au moins une première gamme de fréquences et en un signal d'alimentation (37) dans au moins une deuxième gamme de fréquences distincte de la première.

2. Capteur acoustique selon la revendication 1, **caractérisé en ce qu'**un dispositif (42) est prévu pour démoduler et lisser le signal d'alimentation (37).
